# DEMANDE DE BREVET EUROPEEN

(11) **EP 1 633 081 A1**
(43) Date de publication de la demande: **08.03.2006**
(21) Numéro de dépôt: 05106894.8
(22) Date de dépôt: 27.07.2005
(51) Int. Cl.: H04L 12/24

(54) **DIispositif de diagnostic modulaire à base de connaissances évolutive, pour un réseau de communications**

(30) Priorité: 03.09.2004 FR 0451965
(71) Demandeur: ALCATEL, 75008 Paris (FR)
(72) Inventeur: Marilly, Emmanuel, 91240, SAINT-MICHEL-SUR-ORGE (FR); Betge-Brezetz, Stéphane, 75015, PARIS (FR); Martinot, Olivier, 91210, DRAVEIL (FR); Delegue, Gérard, 94230, CACHAN (FR); Saidi, Mohamed Adel, 92160, ANTONY (FR); Squedin, Sylvain, 91620, NOZAY (FR)
(74) Mandataire: Chaffraix, Sylvain

(57) **Abrégé**

Un dispositif de diagnostic (DD), pour un réseau de communications comportant des équipements de réseau, comprend des moyens de diagnostic (MD) chargés de déterminer la cause de problème(s) survenant au sein du réseau à partir d'informations fournies par les équipements de réseau. Ces moyens de diagnostic (MD) comportent une base de connaissances (BC), agencée sous la forme de blocs élémentaires de diagnostic, et des moyens de traitement (MT) chargés d'établir des associations hiérarchisées choisies entre des blocs choisis de la base de connaissances (BC) de manière à constituer des modèles de diagnostic configurables, adaptés à la détermination de cause de problème(s).

## Description

L'invention concerne le domaine des réseaux de communications gérés, et plus particulièrement les dispositifs de diagnostic permettant de déterminer la cause de problème(s) survenant au sein de tels réseaux.

Comme le sait l'homme de l'art, les problèmes survenant dans les réseaux de communications peuvent avoir diverses origines. Ils peuvent en effet provenir d'une coupure de courant, d'une rupture de liaison, d'une panne ou d'un dysfonctionnement au niveau d'un équipement de réseau, ou d'un élément le constituant, ou encore d'un logiciel, ou de l'intégration d'une version d'un équipement de réseau, ou d'un élément le constituant, ou encore d'un logiciel pas totalement compatible avec le reste du réseau.

Afin de déterminer la cause de problème(s) de nombreux dispositifs (ou outils) de diagnostic ont été proposés. Certains de ces dispositifs utilisent des techniques reposant sur une programmation en langage objet et/ou des langages reposant sur des règles, éventuellement gérées par un moteur de règles. Parmi ces dispositifs, on peut par exemple citer ECXpert (pour « Event Correlation eXpert ») qui permet la construction d'arbres de corrélation d'alarmes à partir de règles définies manuellement, ou les dispositifs de la société ILOG qui utilisent un moteur de règles programmable en vue d'un diagnostic, ou ceux de la société Hewlett Packard, notamment « Network Node Manager » ®, version 6.4, et « Network Node Manager Extended Topology » ®, version 2.0, qui utilisent une technique reposant sur des modèles de défauts, ou le dispositif « Fault Détective for Data Communications » (FDDC) ® de la société Agilent qui remplace les opérations de diagnostic de défauts, effectuées par des techniciens, par des procédés de diagnostic automatisés, ou encore le dispositif TAC ® de la société CISCO, qui est un assistant de détection de problème.

Le principal inconvénient de ces dispositifs réside dans le mode d'acquisition des informations (également appelées connaissances reposant sur l'expertise). En effet, lorsque le dispositif de diagnostic est développé par une société qui n'est pas un équipementier, la base de connaissances (ou d'expertise) n'est pas bien adaptée à certains équipements spécifiques ou à certaines combinaisons d'équipements.

Par ailleurs, lorsque le dispositif de diagnostic est développé par un équipementier, la base de connaissances (ou d'expertise) ne comporte que des informations basiques, si bien que certaines caractéristiques propres aux équipements, comme par exemple le type, le mode de fabrication, la version, la date de fabrication, et le mode d'utilisation, ne sont pas prises en compte. Les informations critiques ne sont d'ailleurs généralement pas communiquées aux clients utilisateurs, tout comme les dispositifs de diagnostic eux-mêmes.

La définition de nouveaux diagnostics ou de vérifications spécifiques s'avère donc difficile et parfois même aucune modification ne peut être apportée à l'outil. En d'autres termes, ces dispositifs de diagnostic souffrent d'un manque de flexibilité.

La société ALCATEL propose également un dispositif de diagnostic reposant sur la théorie probabiliste Bayesienne et permettant de définir des règles pour affiner des hypothèses à partir de notions d'évidence additionnelle et d'informations d'arrière plan, lesquelles aboutissent à des nombres représentant chacun la probabilité qu'une hypothèse soit vraie et permettent la constitution de réseaux (ou diagrammes) bayesiens définissant des opérations de test associées à des poids statistiques ou probabilistes.

Le principal inconvénient de ce dispositif réside dans le fait que ses réseaux bayesiens, et les tests qui leurs sont associés, ne peuvent pas être modifiés une fois intégrés. Par conséquent, si un client utilisateur s'aperçoit qu'un réseau Bayesien n'est pas totalement adapté à son réseau ou bien qu'un équipement spécifique nécessite un test particulier, le dispositif de diagnostic ne peut pas être adapté. Un tel dispositif de diagnostic souffre donc également d'un manque de flexibilité.

Aucun dispositif de diagnostic connu n'apportant une entière satisfaction, l'invention a donc pour but d'améliorer la situation.

Elle propose à cet effet un dispositif de diagnostic comportant des moyens de diagnostic comportant une base de connaissances, agencée sous la forme de blocs élémentaires de diagnostic, et des moyens de traitement chargés d'établir des associations hiérarchisées choisies entre des blocs choisis de la base de connaissances afin de constituer des modèles de diagnostic configurables adaptés à la détermination par les moyens de diagnostic de cause de problème(s) survenant au sein du réseau à partir d'informations fournies par ses équipements de réseau.

Le dispositif de diagnostic peut comporter des caractéristiques complémentaires qui peuvent être prises séparément ou en combinaison, et notamment :
- ses moyens de traitement peuvent être chargés d'associer certains au moins des blocs élémentaires de diagnostic au moyen de règles choisies. Dans ce cas les moyens de traitement peuvent par exemple comprendre un moteur de règles chargé d'établir les associations hiérarchisées choisies entre les blocs choisis. Par ailleurs, certaines au moins des règles peuvent être de type statistique,
- ses moyens de traitement peuvent être chargés d'associer certains au moins des blocs élémentaires de diagnostic au moyen de modèles choisis,
- ses moyens de traitement peuvent être chargés d'associer certains blocs élémentaires de diagnostic choisis au sein d'arborescences choisies constituant certains des modèles de diagnostic,
- ses moyens de traitement peuvent être chargés d'associer des poids statistiques ou probabilistes choisis à certains au moins des blocs élémentaires de diagnostic et/ou à certaines au moins des règles et/ou à certains au moins des modèles,
- ses moyens de traitement peuvent être chargés d'associer des coûts administratifs choisis à certains au moins des blocs élémentaires de diagnostic et/ou à certaines au moins des règles et/ou à certains au moins des modèles,
- certains au moins des modèles de diagnostic peuvent être agencés sous la forme d'un réseau (ou diagramme) bayesien,
- certains au moins des blocs élémentaires de diagnostic peuvent être agencés sous la forme d'un réseau (ou diagramme) bayesien,
- certains au moins des blocs élémentaires de diagnostic peuvent être agencés sous la forme de jeux de tests hiérarchisés,
- ses moyens de traitement peuvent être chargés de modifier certains au moins des blocs élémentaires de diagnostic et/ou certaines au moins des règles et/ou certains au moins des modèles et/ou certains au moins des poids statistiques ou probabilistes et/ou certains au moins des coûts administratifs,
- ses moyens de traitement peuvent comprendre une interface homme/machine, par exemple de type GUI, agencée de manière à permettre à un utilisateur d'effectuer les associations précitées et/ou les modifications précitées.

D'autres caractéristiques et avantages de l'invention apparaîtront à l'examen de la description détaillée ci-après, et des dessins annexés, sur lesquels :
- la figure 1 illustre de façon schématique un exemple de réalisation d'un dispositif de diagnostic selon l'invention, et
- la figure 2 illustre de façon schématique un exemple de réseau Bayesien adapté à la détermination de la cause d'une perte de paquets dans un réseau de type IP VPN.

Les dessins annexés pourront non seulement servir à compléter l'invention, mais aussi contribuer à sa définition, le cas échéant.

L'invention a pour objet de permettre la détermination de la cause d'un problème, survenu au sein d'un réseau de communications géré, au moyen de modèle(s) de diagnostic.

Tout type de réseau géré (et notamment les réseaux à protocole Internet (ou IP)), tout comme tout type de service au sein d'un réseau géré, est concerné par l'invention. Par ailleurs, le diagnostic peut aussi bien concerner le niveau réseau (équipements de réseau et configuration), que le niveau de gestion et de service (équipements de réseau, configuration, qualité de service (QoS), et accord de niveau de service (ou SLA)).

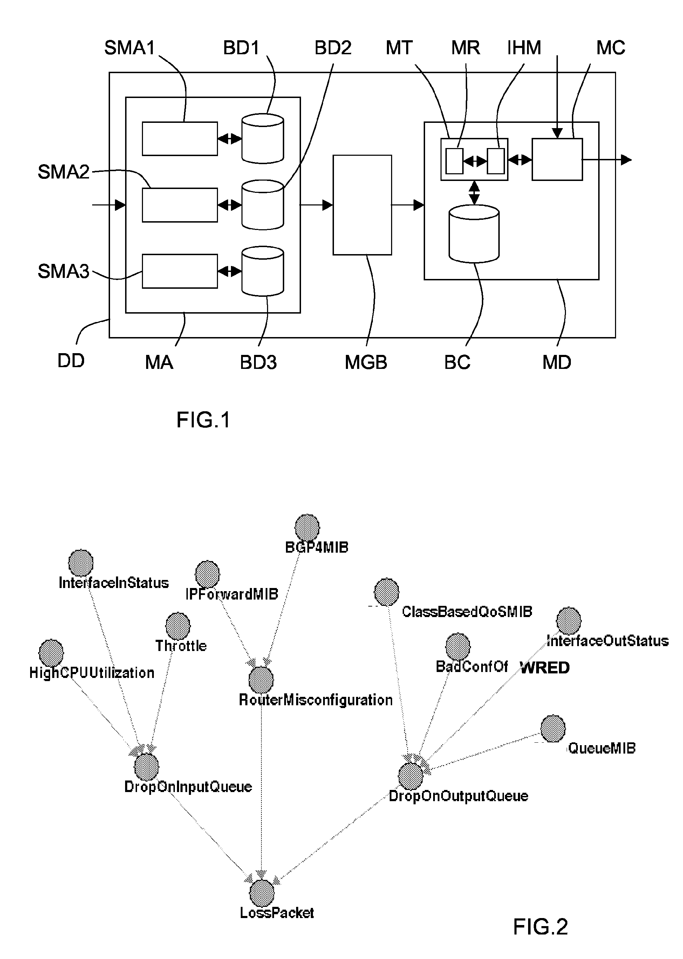

L'invention propose un dispositif de diagnostic DD comportant, comme illustré sur la figure 1, un module de diagnostic MD chargé de déterminer des causes de problèmes à partir d'informations fournies par les équipements du réseau. Un tel dispositif DD est par exemple implanté dans le système de gestion du réseau ou NMS (pour « Network Management System »), ou dans le système de gestion de service du réseau lorsque l'on veut effectuer du diagnostic de service.

Les informations provenant des équipements de réseau sont par exemple des alarmes qu'ils transmettent automatiquement au NMS lorsqu'ils détectent un problème (panne ou dysfonctionnement) en leur sein (c'est-à-dire au niveau de l'un de leurs éléments, par exemple une interface d'entrée ou de sortie) ou bien sur l'une de leurs liaisons. Mais, il peut également s'agir d'informations de gestion et/ou de fonctionnement obtenues auprès de certains équipements de réseau à la requête du NMS, lesquelles sont généralement stockées dans leur base d'information de gestion ou MIB. Il peut également s'agir de mesures relatives à des paramètres de réseau, comme par exemple la bande passante utilisée sur certaines liaisons ou communications (analyse de trafic) ou les taux de perte de paquets sur certaines liaisons ou communications, lesquelles permettent notamment aux opérateurs de réseau de contrôler et gérer la qualité de service (ou QoS) associée à chaque client utilisateur (ou à chaque service) et définie par un accord de niveau de service (ou SLA pour « Service Level Agreement »).

D'une manière générale, toute information utile au diagnostic peut alimenter le module de diagnostic MD du dispositif de diagnostic DD.

Selon l'invention, le module de diagnostic MD comporte une base de données de connaissances reposant sur l'expertise BC, ci-après appelée base de connaissances, et agencée sous la forme de blocs élémentaires de diagnostic, ainsi qu'un module de traitement MT chargé d'établir des associations hiérarchisées choisies entre des blocs choisis de la base de connaissances BC afin de constituer des modèles de diagnostic configurables adaptés à la détermination de cause de problème(s).

Cette base de connaissances BC est préférentiellement construite à partir de données (ou informations) provenant de différentes sources, comme par exemple la conception des équipements (spécifications, configurations, validation, et analogues, et problèmes et/ou faiblesses rencontrés), la fabrication des équipements (composants utilisés, technologies utilisées, et analogues, et problèmes et/ou faiblesses rencontrés), les tests d'équipements en laboratoire (pannes critiques, fiabilité, défauts (ou « bugs »), compatibilité, durées de vie, et analogues), et l'utilisation en conditions réelles (informations provenant notamment des clients-utilisateurs, des services de maintenance et des rapports de panne, comme par exemple les informations statistiques relatives à la fiabilité et aux pannes des équipements et des composants dans le temps, pannes les plus fréquentes des équipements en fonction d'une utilisation spécifique ou d'une fabrication spécifique, compatibilités entre équipements, durée de vie, et analogues).

Comme cela est illustré sur la figure 1, le dispositif de diagnostic DD peut comporter un module d'analyse MA permettant de collecter des données et informations, qu'elles proviennent du réseau lui-même ou de l'opérateur du réseau, et de les analyser en vue de sélectionner celles qui sont utiles à un diagnostic choisi.

Par exemple, le module d'analyse MA est subdivisé en trois sous-modules d'analyse SMA1 à SMA3 couplés respectivement à trois bases de données BD1 à BD3.

Par exemple, le sous-module d'analyse SMA1 est dédié à l'analyse des données et informations de conception et de fabrication des équipements, le sous-module d'analyse SMA2 est dédié à l'analyse des données et informations de tests d'équipements en laboratoire, et le sous-module d'analyse SMA3 est dédié à l'analyse des données et informations d'utilisation en conditions réelles.

Les données d'expertise retenues lors de l'analyse effectuée par un sous-module SMAi (ici i = 1 à 3) sont stockées dans la base de données BDi associée. Les données et informations d'utilisation en conditions réelles variant généralement dans le temps, il est avantageux de les mettre à jour régulièrement, par exemple périodiquement, dans la base de données BD3.

L'analyse de données au sein des différents sous-modules d'analyse SMAi peut se faire par tout moyen, et notamment au moyen de méthodes statistiques comme par exemple la technique d'exploitation de données (ou « data mining »), ou une technique d'apprentissage, ou encore une technique de traitement du signal, ou encore une technique de prédiction/tendance, ou encore une technique reposant sur l'expérience. Elle se fait de préférence sous le contrôle d'un spécialiste.

Lorsque le dispositif de diagnostic DD comporte un module d'analyse MA, il comporte également, comme illustré sur la figure 1, un module de génération de base de connaissances MGB. Ce dernier est couplé au module d'analyse MA, et plus précisément à ses bases de données BDi, ainsi qu'au module de diagnostic MD.

Ce module de génération de base de connaissances MGB peut par exemple élaborer la (ou les) base(s) de connaissances BD, nécessaire(s) au module de diagnostic (MD) selon la méthode indiquée ci-dessous.

Par exemple, le module de génération de base de connaissances MGB commence par constituer un noyau de connaissances, agencé sous la forme de blocs élémentaires de diagnostic, à partir des données et informations de conception et de fabrication des équipements stockées dans la base de données BD1. Puis, il se sert des données et informations de tests d'équipements en laboratoire, stockées dans la base de données BD2, pour améliorer le noyau de connaissances. Enfin, il complète le noyau de connaissances amélioré en utilisant les données et informations d'utilisation en conditions réelles, stockées dans la base de données BD3, afin de constituer une base de connaissances BC agencée sous la forme de blocs élémentaires de diagnostic et adaptée au réseau à diagnostiquer.

Toute technique connue de l'homme de l'art peut être mise en oeuvre par le module de génération de base de connaissances MGB afin de permettre la génération d'une base de connaissances BC agencée sous la forme de blocs élémentaires de diagnostic. Parmi ces techniques, on peut notamment citer les techniques statistiques, les techniques à base de règles et/ou de modèles, et les techniques d'apprentissage par exemple de type réseau de neurones ou réseau de Pétri.

Chaque génération de base de connaissances BC, au moyen du module de génération de base de connaissances MGB, se fait préférentiellement sous le contrôle d'un spécialiste.

Une fois générée par le module de génération de base de connaissances MGB, la base de connaissances BC est communiquée au module de diagnostic MD.

Certaines données stockées dans les bases de données BDi variant généralement dans le temps (notamment celles stockées dans la base de données BD3), il est avantageux de mettre à jour régulièrement, par exemple périodiquement, la base de connaissances BC qui est communiquée au module de diagnostic MD. Le module de génération de base de connaissances MGB peut être agencé à cet effet.

Il est important de noter que le dispositif de diagnostic DD peut ne pas comporter de module d'analyse MA et de module de génération de base de connaissances MGB, lorsque la base de connaissances BC lui est fournie par ailleurs.

Le module de diagnostic MD comporte un module de traitement MT chargé d'établir des associations hiérarchisées choisies entre des blocs choisis de la base de connaissances BC, afin de constituer des modèles de diagnostic configurables, adaptés à la détermination de la cause d'un ou plusieurs problèmes survenant au sein du réseau considéré.

On entend ici par « association hiérarchisée », toute association ou combinaison de blocs de type causal, c'est-à-dire dans laquelle les blocs doivent être utilisés les uns par rapport aux autres selon un ordre éventuellement prédéterminé.

Toute méthode peut être mise en oeuvre par le module de traitement MT pour effectuer les associations hiérarchisées de blocs élémentaires de diagnostic. Il peut notamment utiliser des règles choisies et/ou des modèles choisis et/ou des méthodes statistiques.

Un exemple d'association hiérarchisée de trois blocs, particulièrement simple (et non limitatif), pouvant être effectuée par le module de traitement MT, est donné ci-dessous :
- « exécuter le bloc n°1 de la base de connaissances BC »,
- « si le bloc n°1 ne détecte pas de défaut alors exécuter le bloc n°2 »,
- « si le bloc n°2 ne détecte pas de défaut alors exécuter le bloc n°3 ».

Il est important de noter que certaines au moins des règles peuvent être de type statistique.

Un autre exemple d'association hiérarchisée de treize blocs, plus complexe (et non limitatif), pouvant être effectuée par le module de traitement MT est illustré sur la figure 2. Dans cet exemple, le module de traitement MT a établi un modèle de diagnostic adapté à la détermination de la cause d'une perte de paquets (ou « packet loss ») dans un réseau de type IP VPN (« Internet Protocol Virtual Private Network » - réseau privé virtuel à protocole internet).

Le modèle de diagnostic se présente ici sous la forme d'un réseau (ou diagramme causal) Bayesien, bien connu de l'homme de l'art. Chaque noeud du réseau Bayesien est désigné par un nom qui représente la variable de sortie d'un ensemble d'au moins un test de base (ou élémentaire) à effectuer.

Il est rappelé qu'un réseau Bayesien est destiné, lorsqu'il est exécuté, à détecter un éventuel problème et sa (ou ses) cause(s).

Le réseau Bayesien est un arbre de causalité. Dans l'exemple de la figure 2, trois causes de paquets perdus (ou « packet loss ») ont été répertoriées, chacune affectée d'une certaine probabilité : DropOnlnputQueue (avec une certaine probabilité X), RouterMisconfiguration (avec une certaine probabilité Y), et DropOnOutputQueue (avec une certaine probabilité Z), la somme de ces trois probabilités X, Y et Z étant égale à 1.

De même, au sein de chaque branche partant de PacketLoss, chaque sous-branche est affectée d'une probabilté. Par exemple, l'une des causes de la branche DropOnlnputQueue est Throttle qui est affectée d'une probabilité X1.

Les définitions des différents noeuds Bayesiens de l'exemple de la figure 2 sont données ci-dessous.

« LossPacket » désigne un scénario permettant de trouver la cause originelle (ou « root cause ») d'une perte de paquets dans un réseau IP VPN. Il exécute différents tests suivant des probabilités de cause. Par exemple, le scénario LossPacket teste d'abord interfacelnStatus (qui est généralement la cause la plus probable). Puis, si le statut d'interfacelnStatus est « OK », il teste interfaceOutStatus (qui est généralement la deuxième cause la plus probable). Si le statut d'interfaceOutStatus est « NOK » (ou non OK), LossPacket renvoie InterfaceOutStatus NOK, la cause du problème (par exemple « une interface ne fonctionne pas ») et le nombre de paquets perdus si celui-ci peut être déterminé.

« DropOnlnputQueue » est une variable indiquant si des paquets ont été extraits (ou « dropped ») sur une interface d'entrée (ou « ingress interface »).

« RouterMisconfiguration » est une variable qui n'est pas directement observable. Elle indique si un routeur est ou n'est pas correctement configuré.

« DropOnOutputQueue » est une variable indiquant si des paquets ont été extraits (ou « dropped ») ou non sur une interface de sortie (ou « egress interface »).

Comme indiqué précédemment, au sein du réseau Bayesien dédié à la perte de paquets (PacketLoss), DropOnlnputQueue est affectée d'une probabilité X qui représente la probabilité que la cause des paquets perdus incombe à la file d'attente d'entrée (« InputQueue »), alors que RouterMisconfiguration est affectée d'une probabilité Y qui représente la probabilité que la cause des paquets perdus incombe à une mauvaise configuration de routeur, et que DropOnOutputQueue est affectée d'une probabilité Z qui représente la probabilité que la cause des paquets perdus incombe à la file d'attente de sortie (« OutputQueue »).

De même, au sein de la branche associée à DropOnInputQueue, il y a une probabilité X1 que la cause des paquets perdus incombe à HighCPUUtilization, une probabilité X2 que la cause des paquets perdus incombe à Throttle, et une probabilité X3 que la cause des paquets perdus incombe à InterfacelnStatus.

Par conséquent, lorsque l'on veut déterminer si la cause d'une perte de paquets incombe à la file d'attente d'entrée (« InputQueue »), il faut déterminer si le statut de HighCPUUtilization est « OK » ou « NOK » (ou « non OK ») et/ou si le statut de Throttle est OK ou NOK et/ou si le statut de InterfacelnStatus est OK ou NOK.

« InterfacelnStatus » est une variable modélisant le statut des interfaces d'entrée.

« Throttle » est une variable indiquant si un port est hors service ou non. Cela permet d'obtenir une indication sur l'état de (sur)charge d'un routeur. Cette variable indique le nombre de fois où le récepteur sur un port donné a été mis hors service, par exemple en raison d'une surcharge de traitement ou de mémoire tampon.

« HighCPUUtilization » est une variable indiquant si la capacité de traitement (ou CPU) d'un routeur est surchargée ou non.

« BGP4MIB » est une variable représentant l'état de configuration d'un BGP (« Border Gateway Protocol »). Par exemple si le statut de BGP4MIB est OK cela signifie que le BGP est bien configuré tandis que si le statut de BGP4MIB est NOK cela signifie que le BGP n'est pas bien configuré.

« IPForwardMIB » est une variable de test ayant pour objet de déterminer si un LSP est établi ou non.

« ClassBasedQoSMIB » est une variable de test ayant pour objet de déterminer si la politique de qualité de service (QoS) est convenablement configurée et implémentée dans le routeur.

« InterfaceOutStatus » est une variable modélisant le statut des interfaces de sortie.

« BadConfOfWRED » est un test qui vérifie la configuration de l'algorithme WRED (pour « Weighted Random Early Détection »). Ce test vérifie pour chaque interface de sortie, associée à une étiquette de sortie (ou « label out »), si une stratégie de mise en file d'attente de type RED (Random Early Détection) est définie, puis il collecte le nombre total de paquets extraits.

« QueueMIB » est une variable vérifiant si les modèles de politique (« policy-map ») sont définis dans une interface d'entrée et une interface de sortie.

Dans cet exemple de réseau Bayesien les positions respectives des différents noeuds sont représentatives des probabilités qui sont associées aux branches auxquelles ils appartiennent respectivement.

Des informations complémentaires sur les réseaux Bayesiens et leur utilisation dans les dispositifs de diagnostic peuvent être trouvées dans le document de F. Jensen « An introduction to Bayesian Networks », UCL Press., 1996 (épuisé et réédité en 2001).

Il est important de noter que certains au moins des blocs élémentaires de diagnostic qui sont utilisés dans un modèle de diagnostic (de type réseau Bayesien ou non) peuvent être également agencés sous la forme d'un réseau (ou diagramme) bayesien.

Il est également important de noter que l'on peut effectuer autre chose que des tests pour aboutir à un diagnostic, et notamment des mesures actives ou passives, de la corrélation d'alarme, de la vérification de configuration, de la vérification de consistance de configuration d'un service au travers du réseau, de la lecture de paramètres stockés dans des bases d'informations de gestion (MIBs) ou disponibles dans certains équipements de réseau tels que des routeurs, et spécifiques à un équipement.

Un exemple détaillé d'obtention d'informations destinées à l'élaboration de tests de diagnostic relatif à la qualité de service (QoS) au sein d'un réseau IP VPN est notamment décrit dans le document de Gérard Delègue et al, « IP VPN Network Diagnosis :Technologies and Perspectives », 3rd International Conference on Networking, Mars 2002.

Le module de traitement MT peut éventuellement comprendre un moteur de règles MR chargé d'établir les associations hiérarchisées choisies entre les blocs élémentaires choisis, de préférence sous le contrôle d'un spécialiste.

En outre, dans le cas de modèles de diagnostic de type réseau Bayesien construit par association de blocs élémentaires de tests au moyen de règles, tout comme dans le cas de modèles de diagnostic construits par association de blocs élémentaires de tests au moyen de modèles, le module de traitement MT peut être agencé de manière à associer des poids statistiques ou probabilistes choisis et/ou des coûts administratifs choisis à certains au moins des blocs élémentaires de diagnostic et/ou à certaines au moins des règles et/ou à certains au moins des modèles.

L'association de poids statistiques ou probabilistes permet de donner à certains ensembles (ou jeux) de tests une importance plus grande (ou plus petite) que celle d'autres ensembles (ou jeux) de tests dans le cadre d'un diagnostic. Par ailleurs, l'association de coûts administratifs permet de n'utiliser que certains ensembles (ou jeux) de tests lorsque le coût d'un diagnostic revêt de l'importance.

Cette association de poids statistiques ou probabilistes choisis et/ou de coûts administratifs choisis se fait préférentiellement sous le contrôle d'un spécialiste.

Dans cette variante, il est avantageux d'utiliser une interface homme/machine IHM du type de celle présentée ci-avant pour permettre l'affichage sur un écran d'une arborescence vierge sélectionnée par un spécialiste et le remplissage par ce dernier des noeuds de cette arborescence (ou d'une partie de celle-ci) avec des blocs élémentaires de diagnostic.

Le module de traitement MT peut être agencé pour établir les associations de façon automatisée, sur la base d'instructions fournies par un spécialiste. Mais, il peut également être agencé pour proposer ou mettre à disposition certains ou tous les blocs élémentaires d'une base de connaissances BC et/ou certaines ou toutes les règles envisageables entre lesdits blocs élémentaires, afin qu'un spécialiste définisse les différentes associations destinées à constituer un modèle de diagnostic. Dans ce cas, le module de traitement MT est alors également chargé de la génération (physique) des modèles de diagnostic définis par l'utilisateur.

Afin de permettre à un spécialiste de contrôler (ou de définir) chaque association, qu'il s'agisse d'une association de blocs dans le cadre de l'élaboration d'un modèle de diagnostic ou bien de l'association de poids statistiques ou probabilistes et/ou de coûts administratifs, le module de traitement MT comprend une interface homme/machine IHM, par exemple de type GUI (pour « Graphical User Interface » - interface graphique d'utilisateur).

En l'absence d'une interface IHM le spécialiste peut transmettre ses instructions au module de traitement MT au moyen de tout type de commande (par exemple de type CLI) ou de code.

Une telle interface IHM peut également servir à un spécialiste pour modifier certains au moins des blocs élémentaires de diagnostic et/ou certaines au moins des règles (ainsi qu'éventuellement leurs poids statistiques ou probabilistes) et/ou certains au moins des modèles et/ou certains au moins des poids statistiques ou probabilistes et/ou certains au moins des coûts administratifs.

On entend ici par « modifier », toute intervention ayant pour objet d'ajouter, supprimer ou changer. Par conséquent, une modification peut consister à ajouter ou supprimer ou encore changer un ou plusieurs blocs élémentaires (ou une partie de ceux-ci) et/ou une ou plusieurs règles et/ou modèles dans une base de connaissances BC ou dans un modèle de diagnostic.

Par ailleurs, on a décrit ci-avant un mode de réalisation dans lequel le module de traitement MT effectuait des associations hiérarchisées au moyen de règles et/ou modèles. Mais, on peut envisager une variante dans laquelle le module de traitement MT effectue des associations hiérarchisées de blocs élémentaires de diagnostic choisis au sein d'arborescences choisies. Dans ce cas, chaque arborescence complétée constitue au final un modèle de diagnostic.

Dans cette variante, il est avantageux d'utiliser une interface homme/machine IHM du type de celle présentée ci-avant pour permettre l'affichage sur un écran d'une arborescence vierge sélectionnée par un spécialiste et le remplissage par ce dernier des noeuds de cette arborescence (ou d'une partie de celle-ci) avec des blocs élémentaires de diagnostic.

Dans ce cas, l'association consiste simplement en un enchaînement de blocs élémentaires à exécuter selon l'ordre défini par l'arborescence concernée, sans règles ou modèles entre blocs élémentaires associés.

Une fois qu'un modèle de diagnostic a été généré par le module de traitement MT et activé, il peut alors être utilisé par un module de calcul MC du module de diagnostic MD. Ce module de calcul MC est chargé d'alimenter le modèle de diagnostic activé avec les informations qui proviennent (directement ou indirectement) des équipements de réseau, comme par exemple les alarmes, et de délivrer sur une sortie un diagnostic, c'est-à-dire la (ou les) cause(s) d'un problème survenu au sein du réseau.

Le module de calcul MC est agencé en fonction du (ou des) modèle(s) de diagnostic qu'il utilise. Il est par conséquent conçu de manière à dérouler le scénario d'un modèle de diagnostic, et utilise par exemple une base de données, des outils SNMPs, et analogue, et délivre sur une sortie des résultats constituants des diagnostics.

Par ailleurs, ce module de calcul MC peut être par exemple couplé à un module auxiliaire chargé de proposer à l'opérateur du réseau des actions permettant de remédier à chaque cause déterminée lors d'un diagnostic.

Il est important de noter que le dispositif de diagnostic DD peut comporter un ou plusieurs modules de diagnostic auxiliaires ou un ou plusieurs modèles de diagnostic auxiliaires en complément de celui (MD) décrit ci-avant et de conceptions différentes. Dans ce cas, le module de calcul MC du module de diagnostic MD peut être agencé pour utiliser chaque modèle de diagnostic activé, quelle que soit sa conception.

Il est également important de noter qu'un diagnostic effectué par un dispositif de diagnostic DD peut concerner des équipements de réseau de tout type, qu'il s'agisse de pures composants (« hardwares »), de pures logiciels (« softwares »), ou de combinaisons de ceux-ci.

Le dispositif de diagnostic DD selon l'invention, et notamment son module d'analyse MA, son module de génération de base de connaissances MGB et son module de diagnostic MD, peuvent être réalisés sous la forme de circuits électroniques, de modules logiciels (ou informatiques), ou d'une combinaison de circuits et de logiciels.

L'invention ne se limite pas aux modes de réalisation de dispositif de diagnostic décrits ci-avant, seulement à titre d'exemple, mais elle englobe toutes les variantes que pourra envisager l'homme de l'art dans le cadre des revendications ci-après.

## Revendications

1. Dispositif de diagnostic (DD) pour un réseau de communications comportant des équipements de réseau, ledit dispositif (DD) comprenant des moyens de diagnostic (MD) propres à déterminer la cause de problème(s) survenant au sein dudit réseau à partir d'informations fournies par lesdits équipements de réseau, **caractérisé en ce que** lesdits moyens de diagnostic (MD) comportent une base de connaissances (BC), agencée sous la forme de blocs élémentaires de diagnostic, et des moyens de traitement (MT) comportant un moteur de règles (MR) agencé pour établir des associations hiérarchisées entre des blocs élémentaires de diagnostic choisies dans ladite base de connaissances (BC), au moyen de règles choisies, de manière à constituer des modèles de diagnostic configurables, adaptés à ladite détermination de cause de problème(s).

2. Dispositif selon la revendication 1, **caractérisé en ce que** certaines au moins desdites règles sont de type statistique ou probabiliste.

3. Dispositif selon l'une des revendications 1 ou 2, **caractérisé en ce que** lesdits moyens de traitement (MT) sont agencés pour associer certains au moins desdits blocs élémentaires de diagnostic au moyen de modèles choisis.

4. Dispositif selon l'une des revendications 1 à 3, **caractérisé en ce que** lesdits moyens de traitement (MT) sont agencés pour associer certains blocs élémentaires de diagnostic choisis au sein d'arborescences choisies constituant certains desdits modèles de diagnostic.

5. Dispositif selon l'une des revendications 2 à 4, **caractérisé en ce que** lesdits moyens de traitement (MT) sont agencés pour associer des poids statistiques ou probabilistes choisis à certains au moins desdits blocs élémentaires de diagnostic et/ou à certaines au moins desdites règles et/ou à certains au moins desdits modèles.

6. Dispositif selon l'une des revendications 1 à 5, **caractérisé en ce que** lesdits moyens de traitement (MT) sont agencés pour associer des coûts administratifs choisis à certains au moins desdits blocs élémentaires de diagnostic et/ou à certaines au moins desdites règles et/ou à certains au moins desdits modèles.

7. Dispositif selon l'une des revendications 1 à 6, **caractérisé en ce que** certains au moins desdits modèles de diagnostic sont agencés sous la forme d'un réseau bayesien.

8. Dispositif selon l'une des revendications 1 à 7, **caractérisé en ce que** certains au moins desdits blocs élémentaires de diagnostic sont agencés sous la forme d'un réseau bayesien.

9. Dispositif selon l'une des revendications 1 à 8, **caractérisé en ce que** certains au moins desdits blocs élémentaires de diagnostic sont agencés sous la forme de jeux de tests hiérarchisés.

10. Dispositif selon l'une des revendications 1 à 9, **caractérisé en ce que** lesdits moyens de traitement (MT) sont agencés pour modifier certains au moins desdits blocs élémentaires de diagnostic et/ou certaines au moins desdites règles et/ou certains au moins desdits modèles et/ou certains au moins desdits poids statistiques ou probabilistes et/ou certains au moins desdits coûts administratifs.

11. Dispositif selon l'une des revendications 1 à 10, **caractérisé en ce que** lesdits moyens de traitement (MT) comprennent une interface homme/machine (IHM) agencée pour permettre à un utilisateur d'effectuer lesdites associations et/ou lesdites modifications.
